# EUROPEAN PATENT APPLICATION

(11) **EP 4 552 728 A1**
(43) Date of publication of application: **14.05.2025**
(21) Application number: 22957299.5
(22) Date of filing: 29.08.2022
(51) Int. Cl.: B01D 53/14, B01D 53/18, B01D 53/62, B01D 53/96

(54) **METHOD AND DEVICE FOR SORPTION/DESORPTION OF CARBON DIOXIDE**

(71) Applicant: Proton System Co. Ltd, Sendai-shi, Miyagi 984-0831 (JP); Fuso Nextgen Tech Inc., Tokyo 105-0004 (JP); Tohyama, Eriko, Sendai-shi, Miyagi 984-0831 (JP)
(72) Inventor: TOHYAMA, Eriko, Sendai-shi, Miyagi 984-0831 (JP)
(74) Representative: Schön, Christoph
(86) International application number: PCT/JP2022/032389
(87) International publication number: WO 2024/047695

(57) **Abstract**

Provided is a method and apparatus for separating carbon dioxide from exhaust gas containing carbon dioxide and easily regenerating a sorption solution. In a sorption tank 2, exhaust gas containing carbon dioxide is contacted with a sorption solution to provide an aqueous metal carbonate solution. The aqueous metal carbonate solution is transferred to a desorption tank 3. Under a condition of reducing the desorption tank 3 pressure, ultrasonic waves are radiated onto the aqueous metal carbonate solution to desorb carbon dioxide from the aqueous metal carbonate solution and regenerate the sorption solution. The regenerated sorption solution is transferred to the sorption tank.

## Description

### Technical Field

The present invention relates to a method and apparatus for sorption/desorption of carbon dioxide (also referred to as a method and device for sorption/desorption of carbon dioxide).

### Background Art

In recent years, there has been a demand to reduce emissions of carbon dioxide, a greenhouse gas, in order to suppress global warming. In particular, thermal power plants and steelworks generate large amounts of exhaust gas, and thus various methods are being considered.

In order to reduce the amount of carbon dioxide emissions, for example, there has been proposed a method for sorption/desorption of dioxide (refer to, for example, Patent Literature 1) including: a step of contacting a sorption solution made of an aqueous sodium hydroxide solution with exhaust gas containing carbon dioxide to provide an aqueous sodium carbonate solution in an sorption tank; a step of transferring the aqueous sodium carbonate solution from the sorption tank to a desorption tank; a step of desorbing carbon dioxide from the aqueous sodium carbonate solution in the desorption tank to regenerate the sorption solution; and a step of transferring the regenerated sorption solution from the desorption tank to the sorption tank.

According to the invention described in Patent Literature 1, carbon dioxide is sorbed into the sorption solution in the sorption tank to provide an aqueous sodium carbonate solution, and then carbon dioxide is desorbed from the aqueous sodium carbonate solution in the desorption tank, thereby allowing to efficiently separate only carbon dioxide from the exhaust gas containing carbon dioxide, and further, the sorption solution regenerated by the desorption of carbon dioxide can be reused for sorption of carbon dioxide in the sorption tank.

### Citation List

### Patent Literature

Patent Literature 1: Japanese Patent Laid-Open No. 2005-262051

### Summary of Invention

### Technical Problem

However, in the method described in Patent Literature 1, hydrogen chloride is used when desorbing carbon dioxide from the aqueous sodium carbonate solution in the desorption tank, and thus, after the carbon dioxide is desorbed, an aqueous sodium chloride solution is produced as shown in the following formula:

Na₂CO₃ + 2HCl → CO₂ + 2NaCl + H₂O

In order to regenerate the aqueous sodium hydroxide solution from the aqueous sodium chloride solution, the aqueous sodium chloride solution must be treated with a bipolar electrodialysis apparatus, and further, a treatment for regenerating hydrogen chloride from hydrogen and chlorine produced as by-products in the treatment with the bipolar electrodialysis apparatus is required, which is inconvenient in that the operation becomes complicated.

An object of the present invention is to eliminate such inconveniences and to provide a method for allowing to efficiently separate only carbon dioxide from exhaust gas containing carbon dioxide, and further allowing to easily regenerate the sorption solution after desorption of carbon dioxide, and an apparatus used for the method.

### Solution to Problem

In order to achieve this objective, the method for sorption/desorption of carbon dioxide of the present invention includes: a step of contacting exhaust gas containing carbon dioxide with a sorption solution made of an aqueous metal hydroxide solution capable of generating carbonate in a sorption tank to provide an aqueous metal carbonate solution; a step of transferring the aqueous metal carbonate solution from the sorption tank to a desorption tank; a step of desorbing carbon dioxide from the aqueous metal carbonate solution in the desorption tank to regenerate the sorption solution; a step of transferring the regenerated sorption solution from the desorption tank to the sorption tank; wherein the step of desorbing carbon dioxide from the aqueous metal carbonate solution to regenerate the sorption solution is performed by reducing a desorption tank pressure and irradiating the aqueous metal carbonate solution contained in the desorption tank under reduced pressure with ultrasonic waves.

In the method for sorption/desorption of carbon dioxide of the present invention, in the sorption tank, the sorption solution made of an aqueous metal hydroxide solution capable of generating the carbonate is brought into contact with exhaust gas containing carbon dioxide, thereby causing the sorption solution to sorb carbon dioxide and generating an aqueous solution of a metal carbonate.

In the present invention, the term "metal carbonate" is intended to include metal carbonates and metal hydrogen carbonates.

Then, the aqueous metal carbonate solution is transferred from the sorption tank to the desorption tank. The desorption tank pressure is then reduced and the aqueous metal carbonate solution contained in the desorption tank under reduced pressure is irradiated with ultrasonic waves, thereby desorbing carbon dioxide from the aqueous metal carbonate solution and regenerating the sorption solution. The regenerated sorption solution is transferred to the sorption tank and used again to sorb carbon dioxide.

According to the method for sorption/desorption of carbon dioxide of the present invention, simply reducing the desorption tank pressure and irradiating the aqueous metal carbonate solution contained in the desorption tank under reduced pressure with ultrasonic waves allows carbon dioxide to be desorbed from the aqueous metal carbonate solution and allows the sorption solution to be regenerated, thus allowing to efficiently separate only carbon dioxide from exhaust gas containing carbon dioxide, and further allowing the sorption solution to be easily regenerated after the carbon dioxide is desorbed.

The method for sorption/desorption of carbon dioxide of the present invention can be performed by apparatus for sorption/desorption of carbon dioxide, the apparatus including: an sorption tank including a sorption solution supply unit configured to supply a sorption solution made of an aqueous metal hydroxide solution capable of generating carbonate and an exhaust gas supply unit configured to supply exhaust gas containing carbon dioxide, in which the sorption solution is brought into contact with the exhaust gas to provide an aqueous metal carbonate solution; an aqueous metal carbonate solution transfer unit configured to transfer the aqueous metal carbonate solution from the sorption tank to a desorption tank; a desorption tank including an ultrasonic irradiation unit and a pressure reducing unit, in which carbon dioxide is desorbed from the aqueous metal carbonate solution to regenerate the sorption solution; a carbon dioxide extraction unit configured to extract carbon dioxide from the desorption tank; and an sorption solution transfer unit configured to transfer the regenerated sorption solution from the desorption tank to the sorption tank.

In the apparatus for sorption/desorption of carbon dioxide of the present invention, the sorption tank is preferably part of a conduit configured to transport exhaust gas from a source of exhaust gas containing carbon dioxide to the exhaust gas treatment apparatus.

In addition, in the apparatus for sorption/desorption of carbon dioxide of the present invention, the conduit is preferably a pipeline connecting the source of exhaust gas containing carbon dioxide and the exhaust gas treatment apparatus.

### Brief Description of Drawings

FIG. 1 is a system configuration diagram showing an example of an apparatus configuration used in the method for sorption/desorption of carbon dioxide of the present invention.
FIG. 2 is a flowchart showing a method for sorption/desorption of carbon dioxide of the present invention.
FIG. 3 is a system configuration diagram showing an example of an apparatus configuration used in the method for sorption/desorption of carbon dioxide of the present invention.

### Description of Embodiments

Then, embodiments of the present invention will be described in more detail with reference to the accompanying drawings.

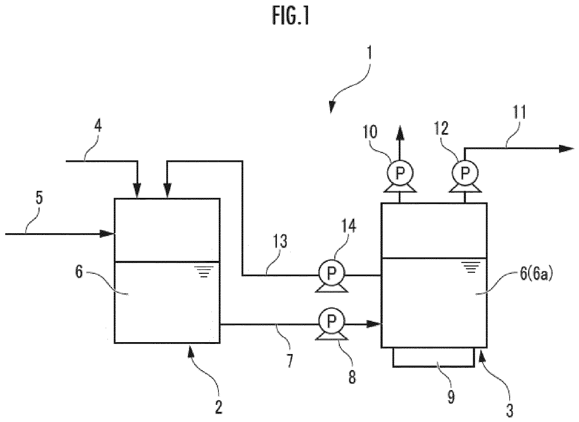

The method for sorption/desorption of carbon dioxide of the present embodiment can be performed, for example, by an apparatus 1 for sorption/desorption of carbon dioxide shown in FIG. 1.

As shown in FIG. 1, the apparatus 1 for sorption/desorption of carbon dioxide of the present embodiment includes a sorption tank 2 and a desorption tank 3. The sorption tank 2 includes a sorption solution conduit 4 configured to supply an aqueous metal hydroxide solution capable of generating carbonate as a sorption solution, and an exhaust gas supply conduit 5 configured to supply exhaust gas containing carbon dioxide, and stores an aqueous metal carbonate solution 6 generated when the sorption solution sorbs carbon dioxide. In addition, the sorption tank 2 includes an aqueous metal carbonate solution transfer conduit 7 configured to transfer the aqueous metal carbonate solution 6 to the desorption tank 3, and the aqueous metal carbonate solution transfer conduit 7 is connected to the desorption tank 3 via a first transfer pump 8.

The desorption tank 3 not only includes an ultrasonic transducer apparatus 9 on the outside of the bottom surface configured to irradiate ultrasonic waves to the contained aqueous metal carbonate solution 6, but also includes a vacuum pump 10 configured to reduce the upper space pressure of the aqueous metal carbonate solution 6, and a carbon dioxide transfer conduit 11 configured to suck the carbon dioxide desorbed from the aqueous metal carbonate solution 6 and to transfer it to the outside. The carbon dioxide transfer conduit 11 includes a suction pump 12 in the middle. In addition, the desorption tank 3 includes a sorption solution transfer conduit 13 configured to transfer the sorption solution 6a regenerated by desorbing carbon dioxide from the aqueous metal carbonate solution 6 to the sorption tank 2, and the sorption solution transfer conduit 13 is connected to the sorption tank 2 via a second transfer pump 14.

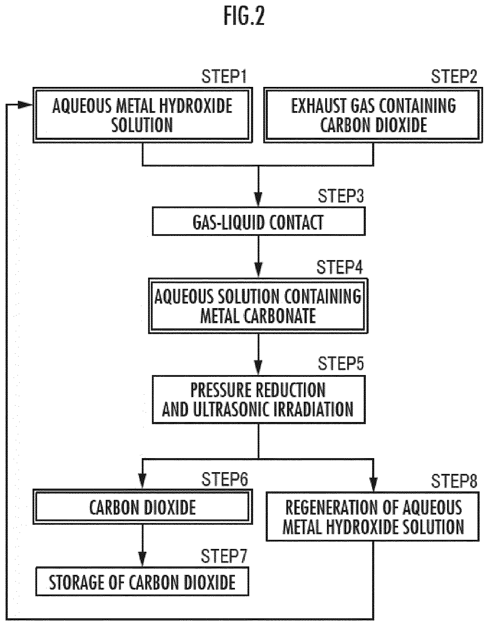

Then, with reference to FIG. 2, the method for sorption/desorption of carbon dioxide of the present embodiment using the apparatus 1 for sorption/desorption of carbon dioxide shown in FIG. 1 will be described.

In the method for sorption/desorption of carbon dioxide of the present embodiment, first, an aqueous metal hydroxide solution capable of generating carbonate is supplied as a sorption solution to the sorption tank 2 through the sorption solution conduit 4 (STEP 1). At the same time, exhaust gas containing carbon dioxide is supplied to the sorption tank 2 through the exhaust gas supply pipe 5 (STEP 2), and the sorption solution and the exhaust gas are brought into gas-liquid contact in the sorption tank 2 (STEP 3).

The aqueous metal hydroxide solution capable of generating a carbonate may be any aqueous metal hydroxide solution capable of generating a carbonate upon reaction with carbon dioxide, for example, aqueous metal hydroxide solutions such as sodium, potassium, calcium, and magnesium may be used, but it is preferable to use an aqueous sodium hydroxide solution. In the following, in the present embodiment, a case where an aqueous sodium hydroxide solution is used as the sorption solution will be described as an example.

The aqueous sodium hydroxide solution may be prepared from commercially available sodium hydroxide crystals or may be produced by electrolysis of an aqueous sodium chloride solution.

The gas-liquid contact between the sorption solution and the exhaust gas may be performed by bringing the exhaust gas into contact with an aqueous sodium hydroxide solution in the sorption tank 2 as shown in FIG. 1, or by bubbling the exhaust gas into the aqueous sodium hydroxide solution stored in the sorption tank 2.

When the exhaust gas is brought into contact with the aqueous sodium hydroxide solution in the sorption tank 2, a shelf may be provided in the sorption tank 2 and packing used in a distillation tower may be placed on the shelf to increase the contact area between the exhaust gas and the aqueous sodium hydroxide solution. In addition, the gas-liquid contact between the sorption solution and the exhaust gas may be performed by combining two or more of the above-described methods.

As a result of the gas-liquid contact, the aqueous sodium hydroxide solution as the sorption solution reacts with carbon dioxide, and thus carbon dioxide is sorbed into the aqueous sodium hydroxide solution, thereby providing an aqueous solution 6 containing sodium carbonate or sodium bicarbonate (STEP 4). In the present embodiment, the aqueous solution 6 containing sodium carbonate or sodium bicarbonate is collectively referred to as an aqueous sodium carbonate solution 6 for convenience.

The end point of the reaction in which the aqueous sodium carbonate solution 6 is produced can be detected by the change in the liquid property of the liquid stored in the sorption tank 2 from strongly alkaline to acidic. The change in the liquid property can be detected by a pH meter (not shown) that is provided in the sorption tank 2.

Then, the aqueous sodium carbonate solution 6 produced in the sorption tank 2 is transferred to the desorption tank 3 via the aqueous metal carbonate solution transfer conduit 7 by operating the first transfer pump 8. The first transfer pump 8 stops when a predetermined amount of the aqueous sodium carbonate solution 6 in the sorption tank 2 has been transferred to the desorption tank 3.

Then, the pressure in the upper space of the desorption tank 3 is reduced to 5 to 50 kPa by the vacuum pump 10, and while the inside of the desorption tank 3 is in a state in which the pressure inside the desorption tank 3 is reduced to this range, ultrasonic waves having a frequency of 100 to 300 kHz are radiated to the aqueous metal carbonate solution 6 contained in the desorption tank 3 by the ultrasonic transducer apparatus 9 with an output of 70 to 120 W/m², preferably 75 to 114 m² (STEP 5), thereby desorbing carbon dioxide from the aqueous metal carbonate solution 6 (STEP 6).

The vacuum pump 10 operates after the first transfer pump 8 stops, and stops when the pressure in the upper space of the desorption tank 3 reaches the above-described range. The suction pump 12 operates after ultrasonic waves are radiated to the aqueous metal carbonate solution 6 by the ultrasonic transducer apparatus 9, and stops when the reaction of desorbing carbon dioxide reaches the end point thereof.

The vacuum pump 10 and the suction pump 12 may be any pump capable of reducing the pressure of the desorption tank 3, and may be a vacuum generating apparatus such as an ejector or an aspirator.

As a modified example of the method for sorption/desorption of carbon dioxide, the pressure reduction of the desorption tank 3 by the vacuum pump 10 in STEP 5 and the desorption of carbon dioxide by the suction pump 12 in STEP 6 may be performed by a single pump.

The end point of the reaction in which carbon dioxide is desorbed from the aqueous sodium carbonate solution 6 can be detected by the change in the liquid property of the liquid stored in the desorption tank 3 from acidic to alkaline. The change in liquid property can be detected by a pH meter (not shown) provided in the desorption tank 3.

Then, the carbon dioxide is extracted from the desorption tank 3 via the carbon dioxide transfer conduit 11 by operating the suction pump 12, and is stored separately (STEP 7).

The aqueous sodium carbonate solution 6 in the desorption tank 3 becomes an aqueous sodium hydroxide solution as carbon dioxide is desorbed, and is regenerated as a sorption solution 6a (STEP 8).

Then, by operating the second transfer pump 14, the regenerated sorption solution 6a is transferred to the sorption tank 2 via the sorption solution transfer conduit 13, and can again be subjected to gas-liquid contact between the sorption solution 6a and the exhaust gas containing carbon dioxide. The second transfer pump 14 stops when a predetermined amount of the sorption solution 6a in the desorption tank 3 has been transferred to the sorption tank 2.

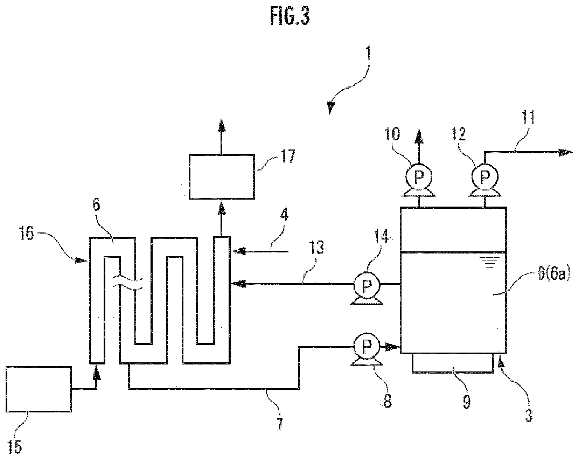

Then, with reference to FIG. 3, another embodiment of the apparatus 1 for sorption/desorption of carbon dioxide shown in FIG. 1 will be described. As shown in FIG. 3, the sorption tank 2 in the apparatus 1 for sorption/desorption of carbon dioxide shown in FIG. 1 can be part of a conduit that transports exhaust gas from a source 15 of exhaust gas containing carbon dioxide to an exhaust gas treatment apparatus 17, and further, the conduit can be a pipeline 16 configured to connect the source of exhaust gas containing carbon dioxide and the exhaust gas treatment apparatus.

Examples of the source 15 of exhaust gas containing carbon dioxide include thermal power plants and steelworks. In addition, examples of the exhaust gas treatment apparatus 17 include apparatus including a neutralizing unit configured to neutralize nitrogen oxides, sulfur oxides, and the like contained in the exhaust gas, and a bag filter or the like configured to remove fly ash contained in the exhaust gas.

By using a part of a conduit, for example a pipeline 16, which transports exhaust gas from the source 15 of exhaust gas containing carbon dioxide to the exhaust gas treatment apparatus 17 as the sorption tank 2, the gas-liquid contact can be performed without providing a sorption tank 2, and the apparatus configuration can be simplified.

Gas-liquid contact between the sorption solution and the exhaust gas in the pipeline 16 can be set to countercurrent contact between the sorption solution and the exhaust gas by connecting a sorption solution supply unit 4 to the downstream side of the pipeline 16 and connecting an aqueous metal carbonate solution transfer unit 7 to the upstream side of the pipeline 16, and thus the aqueous metal carbonate solution 6 after sorbing carbon dioxide can be efficiently transferred to the desorption tank 3.

### Reference Sign List

- 1: Apparatus for sorption/desorption of carbon dioxide
- 2: Sorption tank
- 3: Desorption tank
- 4: Sorption solution supply unit
- 5: Exhaust gas supply unit
- 6: Aqueous metal carbonate solution
- 6a: Sorption solution
- 7, 8: Aqueous metal carbonate solution transfer unit
- 9: Ultrasonic irradiation unit
- 10: Pressure-reducing unit
- 11, 12: Carbon dioxide extraction unit
- 13, 14: Sorption solution transfer unit

## Claims

1. A method for sorption/desorption of carbon dioxide, comprising:
a step of contacting exhaust gas containing carbon dioxide with a sorption solution made of an aqueous metal hydroxide solution capable of generating carbonate in a sorption tank to provide an aqueous metal carbonate solution;
a step of transferring the aqueous metal carbonate solution from the sorption tank to a desorption tank;
a step of desorbing carbon dioxide from the aqueous metal carbonate solution in the desorption tank to regenerate the sorption solution;
a step of transferring the regenerated sorption solution from the desorption tank to the sorption tank,
wherein the step of desorbing carbon dioxide from the aqueous metal carbonate solution to regenerate the sorption solution is performed by reducing a desorption tank pressure and irradiating the aqueous metal carbonate solution contained in the desorption tank under reduced pressure with ultrasonic waves.

2. An apparatus for sorption/desorption of carbon dioxide, comprising:
a sorption tank including a sorption solution supply unit configured to supply a sorption solution made of an aqueous metal hydroxide solution capable of generating carbonate, and an exhaust gas supply unit configured to supply exhaust gas containing carbon dioxide, wherein the exhaust gas is sorbed into the sorption solution to provide an aqueous metal carbonate solution;
an aqueous metal carbonate solution transfer unit configured to transfer the aqueous metal carbonate solution from the sorption tank to a desorption tank;
a desorption tank including an ultrasonic irradiation unit and a pressure-reducing unit, wherein carbon dioxide is desorbed from the aqueous metal carbonate solution to regenerate the sorption solution;
a carbon dioxide extraction unit configured to extract carbon dioxide from the desorption tank; and
a sorption solution transfer unit configured to transfer the regenerated sorption solution from the desorption tank to the sorption tank.

3. The apparatus for sorption/desorption of carbon dioxide according to claim 2,
wherein the sorption tank is part of a conduit configured to transport exhaust gas from a source of exhaust gas containing carbon dioxide to an exhaust gas treatment apparatus.

4. The apparatus for sorption/desorption of carbon dioxide according to claim 3,
wherein the conduit is a pipeline connecting the source of exhaust gas containing carbon dioxide and the exhaust gas treatment apparatus.
